# EUROPÄISCHE PATENTANMELDUNG

(11) **EP 1 566 980 A1**
(43) Veröffentlichungstag der Anmeldung: **24.08.2005**
(21) Anmeldenummer: 04004076.8
(22) Anmeldetag: 23.02.2004
(51) Int. Cl.: H04Q 7/30

(54) **Verfahren zum Übertragen von Daten innerhalb einer Basisstation eines Mobilfunksystems sowie entsprechende Basisstation**

(71) Anmelder: SIEMENS AKTIENGESELLSCHAFT, 80333 München (DE)
(72) Erfinder: Merz, Peter, 81373 München (DE); Splett, Armin, Dr., 89081 Ulm (DE)

(57) **Zusammenfassung**

Daten IQ eines ersten Mobilfunksystems werden in einer Basisbandeinheit BB der Basisstation BS im Basisband verarbeitet und in einer Hochfrequenzeinheit RF der Basisstation vom bzw. in den Hochfrequenzbereich umgesetzt. Die Daten IQ des ersten Mobilfunksystems werden zwischen der Basisbandeinheit BB und der Hochfrequenzeinheit RF über eine Schnittstelle IC übertragen. Zu sendende Daten IP eines zweiten Mobilfunksystems werden vor einer Bearbeitung im Basisband und/oder empfangene Daten IP des zweiten Mobilfunksystems werden nach einer Bearbeitung im Basisband ebenfalls über die Schnittstelle IC übertragen.

## Beschreibung

Die Erfindung betrifft ein Verfahren zum Übertragen von Daten innerhalb einer Basisstation eines Mobilfunksystems sowie eine entsprechende Basisstation.

In Mobilfunksystemen erfolgt eine Kommunikation von Teilnehmern des Mobilfunksystems über Funkwellen. Es sind eine Vielzahl von Mobilfunksystemen bekannt, beispielsweise für die zweite Mobilfunkgeneration GSM (Global System of Mobile Communication) oder IS-95 und für die dritte Mobilfunkgeneration UMTS-FDD (Universal Mobile Telecommunication System-Frequency Division Duplex). Weiterhin sind Mobilfunksysteme realisierbar, die nach einem der so genannten WLAN- (Wireless Local Area Network) oder WMAN (Wireless Metropolitan Area Network) Standards konzipiert sind, wie beispielsweise die Standards 802.x.

Die Funkzugangspunkte von Mobilfunksystemen, mit denen die Teilnehmer über die Luftschnittstelle kommunizieren, werden häufig auch als Basisstationen bezeichnet. Mehrere Unternehmen haben gemeinsam mit Siemens eine Schnittstelle innerhalb solcher Basisstationen definiert, die zunächst für UMTS-FDD und später auch für andere Standards genutzt werden soll. Diese Schnittstelle ist unter der Bezeichnung Common Public Radio Interface (CPRI) bekannt. CPRI verbindet den so genannten Radio Equipment Control-Teil einer Basisstation mit ihrem so genannten Radio Equipment-Teil. Der Radio Equipment Control-Teil beinhaltet unter anderem die Basisbandverarbeitung der zu übertragenden bzw. der empfangenen Signale, während im Radio Equipment Teil die Umsetzung von zu sendenden Signalen in das Hochfrequenzband bzw. von empfangenen Signalen ins Basisband erfolgt.

Um Kosten bei der Netzplanung und bei der Installation zu sparen, kann es sinnvoll sein, Basisstationen bzw. Funkzugangspunkte unterschiedlicher Mobilfunksysteme am selben Standort vorzusehen. Der Erfindung liegt die Aufgabe zugrunde, dieses in vorteilhafter Weise zu ermöglichen.

Diese Aufgabe wird mit einem Verfahren gemäß Anspruch 1 sowie einer Basisstation gemäß dem nebengeordneten Anspruch gelöst. Ausführungsformen und Weiterbildungen der Erfindung sind Gegenstand abhängiger Ansprüche.

Das erfindungsgemäße Verfahren zum Übertragen von Daten innerhalb einer Basisstation eines ersten Mobilfunksystems sieht vor, dass Daten des ersten Mobilfunksystems in einer Basisbandeinheit der Basisstation im Basisband verarbeitet werden und in einer Hochfrequenzeinheit der Basisstation vom bzw. in den Hochfrequenzbereich umgesetzt werden, dass die Daten des ersten Mobilfunksystems zwischen der Basisbandeinheit und der Hochfrequenzeinheit über eine Schnittstelle übertragen werden und dass zu sendende Daten eines zweiten Mobilfunksystems vor einer Bearbeitung im Basisband und/oder empfangene Daten des zweiten Mobilfunksystems nach einer Bearbeitung im Basisband ebenfalls über die Schnittstelle übertragen werden.

Während zu sendende Daten des ersten Mobilfunksystems also vor ihrer Übermittlung über die Schnittstelle im Basisband verarbeitet und erst nach der Übermittlung über die Schnittstelle in den Hochfrequenzbereich umgesetzt werden, erfolgt für zu sendende Daten des zweiten Mobilfunksystems das Übertragen über die Schnittstelle noch vor einer Basisbandbearbeitung. In analoger Weise erfolgt somit für empfangene Daten des ersten Mobilfunksystems die Basisbandverarbeitung erst nach dem Übertragen über die Schnittstelle, während die Basisbandverarbeitung für empfangene Daten des zweiten Mobilfunksystems bereits vor dem Übertragen über die Schnittstelle durchgeführt wird.

Dies bedeutet, dass für die Übermittlung der Daten des zweiten Mobilfunksystems vom Standort der Hochfrequenzeinheit zum Standort der Basisbandeinheit der Basisstation des ersten Mobilfunksystems sowie in umgekehrter Richtung keine separate Schnittstelle vorgesehen sein muss. Somit entfällt die Notwendigkeit einer zusätzlichen Verbindung zur Übermittlung der Daten des zweiten Mobilfunksystems. Dies ist insbesondere dann von Vorteil, wenn der Abstand zwischen der Hochfrequenzeinheit und der Basisbandeinheit beträchtlich ist, wie beispielsweise wenn die Basisbandeinheit im Keller eines Gebäudes und die Hochfrequenzeinheit auf dem Dach des Gebäudes angeordnet ist.

Daher ermöglicht die Erfindung in vorteilhafter Weise die Verwendung einer ohnehin für die Basisstation des ersten Mobilfunksystems vorgesehenen Schnittstelle zwischen der Basisbandeinheit und der Hochfrequenzeinheit auch für die Übertragung der Daten des zweiten Mobilfunksystems, ohne dass aufwendige Anpassungen bei der Konzipierung der Basisstation des ersten Mobilfunksystems vorgenommen werden müssen.

Nach einer Weiterbildung der Erfindung sind die Daten des zweiten Mobilfunksystems Ein- und/oder Ausgangsdaten eines Funkzugangspunktes des zweiten Mobilfunksystems.

Bei den beiden Mobilfunksystemen kann es sich um beliebige Mobilfunksysteme handeln, bei denen eine Kommunikation mit mobilen Teilnehmern über Funkwellen erfolgt. Wenigstens eines der beiden Mobilfunksysteme kann beispielsweise zellular aufgebaut sein, dass heißt eine Vielzahl von Funkzellen mit wenigstens einer Basisstation bzw. einem Funkzugangspunkt aufweisen, der zur Versorgung der jeweiligen Funkzelle dient.

Nach einer Ausführungsform der Erfindung handelt es sich bei der Schnittstelle zwischen der Basisbandeinheit und der Hochfrequenzeinheit um eine serielle Schnittstelle, über die die Daten der beiden Mobilfunksysteme im Zeitmultiplex übertragen werden. Nach einer bevorzugten Ausführungsform handelt es sich bei der seriellen Schnittstelle um eine nach dem eingangs erwähnten CPRI-Standard. Dabei kommt jede Version des CPRI-Standards (die aktuelle Version ist die Version 1.0) in Betracht, auch zukünftige Versionen.

Nach einer Ausführungsform der Erfindung sind die Daten des ersten Mobilfunksystems der physikalischen Schicht und die Daten des zweiten Mobilfunksystems einer höheren Schicht eines Schichtenmodells, insbesondere des ISO-OSI- (International Standards Organisation-Open System Interconnect-) Schichtenmodells zuzuordnen.

Nach einer Weiterbildung der Erfindung senden bzw. empfangen die Basisstation des ersten Mobilfunksystems und der Funkzugangspunkt des zweiten Mobilfunksystems zu übertragende Signale mit einer gemeinsamen Sende- und/oder Empfangsantenne. Hierdurch wird die Notwenigkeit von separaten Antennen vermieden.

Unabhängig davon, ob gemeinsame Sende- oder Empfangsantennen benutzt werden, sieht eine Weiterbildung der Erfindung vor, dass der Funkzugangspunkt des zweiten Mobilfunksystems und die Hochfrequenzeinheit der Basisstation des ersten Mobilfunksystems baulich in eine gemeinsame Einheit integriert sind. Beide können jedoch auch baulich separat voneinander realisiert sein.

Die erfindungsgemäße Basisstation für das erste Mobilfunksystem weist Mittel bzw. Einheiten auf, die die Durchführung des erfindungsgemäßen Verfahrens unterstützen. Ausführungsformen und Weiterbildungen der erfindungsgemäßen Basisstation weisen entsprechende Mittel bzw. Einheiten auf, um die Ausführungsformen und Weiterbildungen des erfindungsgemäßen Verfahrens durchführen zu können.

Die Erfindung wird im Folgenden anhand von in den Figuren dargestellten Ausführungsbeispielen näher erläutert. Es zeigen:
- Figur 1: ein erstes Ausführungsbeispiel der Erfindung und
- Figur 2: ein zweites Ausführungsbeispiel der Erfindung.

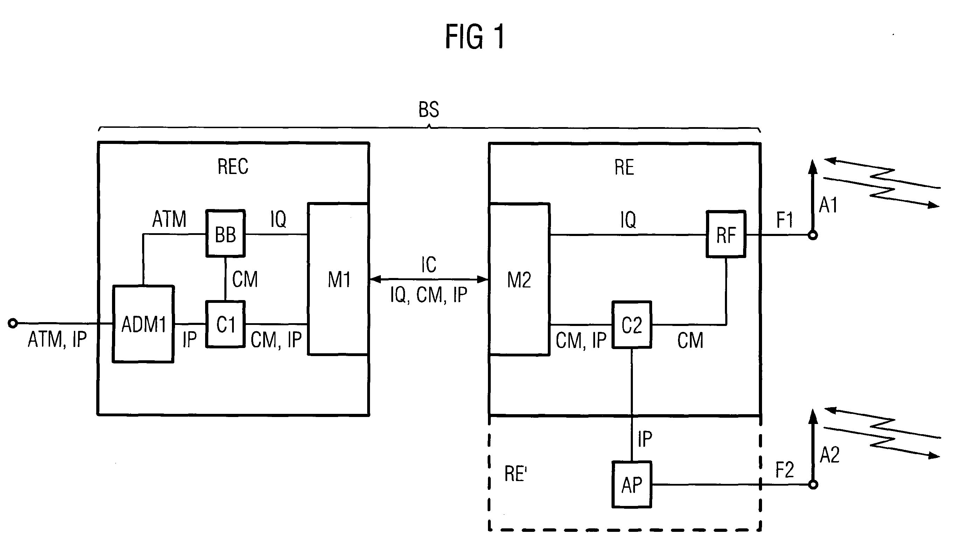

Figur 1 zeigt eine Basisstation BS eines ersten Mobilfunksystems nach dem UMTS-FDD-Standard und einen Funkzugangspunkt AP eines zweiten Mobilfunksystems nach einem WLAN oder WMAN Standard, beispielsweise 802.11 oder 802.16. Bei anderen Ausführungsbeispielen der Erfindung können die Basisstation BS und der Funkzugangspunkt AP jedoch auch beliebigen anderen Mobilfunksystemen zugeordnet sein, beispielsweise können beide Mobilfunksystemen zugeordnet sein, die demselben Standard entsprechen, jedoch von unterschiedlichen Betreibern betrieben werden.

Die Basisstation BS in Figur 1 weist eine erste Einheit REC (Radio Equipment Control) auf und eine zweite Einheit RE (Radio Equipment), die über eine Schnittstelle IC nach dem CPRI-Standard miteinander verbunden sind. In der ersten Einheit REC erfolgt die Steuerung und Verwaltung der Basisstation durch einen ersten Prozessor C1, der entsprechende Steuersignale CM zur Steuerung weiterer Funktionseinheiten innerhalb der Basisstation BS erzeugt. Über die Steuersignale CM erfolgt beispielsweise die Steuerung der Sendeleistung, mit der zu sendende Signale über die zweite Einheit RE auszusenden sind. Die zweite Einheit RE weist einen zweiten Prozessor C2 zur Verarbeitung von vom ersten Prozessor C1 übermittelten Steuersignalen CM und zur entsprechenden Aussteuerung der Hochfrequenzeinheit RF auf. Wenigstens ein Teil der Steuersignale CM wird daher über die Schnittstelle IC zur zweiten Einheit RE und weiter zum zweiten Prozessor C2 übertragen. Auch in umgekehrter Übertragungsrichtung erfolgt die Übermittlung von Steuersignalen CM vom zweiten Prozessor C2 zum ersten Prozessor C1. Es handelt sich dabei beispielsweise um Steuersignale zur Automatic Gain Control und zur Empfangssignalstärke.

Die Steuersignale CM des ersten Prozessors C1 gelangen über die Schnittstelle IC zu einem zweiten Prozessor C2 innerhalb der zweiten Einheit RE, der eine Auswertung der Steuersignale CM vornimmt und die Hochfrequenzeinheit RF in entsprechender Weise ansteuert.

Die erste Einheit REC der Basisstation BS beinhaltet eine Basisbandeinheit BB zum Verarbeiten von Daten IQ des ersten Mobilfunksystems im Basisband. Die Basisbandeinheit BB führt unter anderem eine Kanalkodierung, eine Interleaving, ein Spreizen und eine Verwürfelung von zu sendenden Daten des ersten Mobilfunksystems durch. Ebenso führt die Basisbandeinheit BB eine Kanaldekodierung, ein De-Interleaving, ein Entspreizen und ein Entwürfeln von empfangenen Daten des ersten Mobilfunksystems durch.

In der zweiten Einheit RE der Basisstation BS befindet sich eine Hochfrequenzeinheit RF, mittels derer die Daten IQ, die zuvor von der Basisbandeinheit BB erzeugt und über die Schnittstelle IC übertragen wurden, digital/analog gewandelt werden, in den Hochfrequenzbereich umgesetzt und anschließend leistungsverstärkt und als Funksignale F1 über eine erste Antenne A1 abgestrahlt werden. In umgekehrter Übertragungsrichtung werden über die erste Antenne A1 empfangene Funksignale F1 des ersten Mobilfunksystems innerhalb der Hochfrequenzeinheit RF rauscharm verstärkt, vom Hochfrequenzbereich ins Basisband umgesetzt und anschließend analog/digital gewandelt. Die empfangenen Daten IQ werden anschließend über die Schnittstelle IC zur Basisbandeinheit BB übertragen. Nach der Basisbandverarbeitung in der Basisbandeinheit BB werden die empfangenen Daten des ersten Mobilfunksystems als ATM - Datenpakete ATM (bei anderen Ausführungsbeispielen kann es sich beispielsweise auch um IP-Datenpakete oder um leitungsvermittelte Daten (circuit switched) handeln) über einen ersten Add-Drop-Multiplexer ADM1 einem Ausgang der Basisstation BS zugeführt, von wo eine Übermittlung an einen (in der Figur 1 nicht dargestellten) Basisstationscontroller bzw. Funknetzcontroller erfolgt. In umgekehrter Übertragungsrichtung gelangen ATM-Datenpakete ATM vom Basisstationscontroller über den ersten Add-Drop-Multiplexer ADM1 zur Basisbandeinheit BB der Basisstation BS und von dort nach einer Basisbandverarbeitung über die Schnittstelle IC zur Hochfrequenzeinheit RF innerhalb der zweiten Einheit RE der Basisstation BS.

Über die Schnittstelle IC zwischen den beiden Einheiten REC, RE der Basisstation BS werden im Zeitmultiplex neben den Basisbanddaten IQ und den Steuersignalen CM auch Daten IP des zweiten Mobilfunksystems, nämlich Ein- und Ausgangsdaten des Funkzugangspunktes AP im Zeitmultiplex übertragen. Dabei erfolgt eine Übertragung der (Nutz-)Daten IQ des ersten Mobilfunksystems nach dem CPRI IQ Protokoll, während die Steuersignale CM mittels HDLC (High Data Link Control)- oder Ethernet-Protokoll und die Daten IP des zweiten Mobilfunksystems nach dem Ethernet-Protokoll oder HDLC-Protokoll übertragen werden.

Die Daten IP des zweiten Mobilfunksystems haben das Format von IP- (Internet Protocol) Datenpaketen. Der Funkzugangspunkt AP weist dieselbe Funktionalität auf wie ein herkömmlicher Funkzugangspunkt des betrachteten zweiten Mobilfunksystems, in diesem Fall wie ein herkömmlicher Funkzugangspunkt nach dem 802.11 oder 802.16 Standard. Der Funkzugangspunkt AP kann, wie in Figur 1 dargestellt, baulich separat von der zweiten Einheit RE der Basisstation BS des ersten Mobilfunksystems ausgeführt sein. Es ist jedoch auch möglich, dass der Funkzugangspunkt AP in die zweite Einheit RE baulich integriert ist (entsprechend der gestrichelt in Figur 1 angedeuteten zweiten Einheit RE').

Im Funkzugangspunkt AP der Figur 1 erfolgt sowohl eine Basisbandverarbeitung der Daten IP, als auch ihre Umsetzung vom Basisband in den Hochfrequenzbereich bzw. umgekehrt. Über eine zweite Antenne A2 empfangene Funksignale F2 des zweiten Mobilfunksystems werden dem Funkzugangspunkt AP zugeführt, dort ins Basisband umgesetzt und einer Basisbandverarbeitung unterzogen. Als Ausgangssignale des Funkzugangspunkts AP werden die Daten IP in Form von IP-Paketen dem zweiten Prozessor C2 innerhalb der zweiten Einheit RE der Basisstation BS zugeführt. Bei diesem Ausführungsbeispiel hat der zweite Prozessor C2 nämlich die zusätzliche Funktionalität eines Routers für die Daten IP des zweiten Mobilfunksystems zwischen der Schnittstelle IC und dem Funkzugangspunkt AP und in umgekehrter Richtung (bei anderen Ausführungsbeispielen der Erfindung kann diese Funktionalität des zweiten Prozessors auch getrennt von den sonstigen Funktionen des zweiten Prozessors durch einen weiteren Prozessor realisiert sein). Der zweite Prozessor C2 überträgt die Daten IP des Funkzugangspunkts AP über die Schnittstelle IC zum ersten Prozessor C1 innerhalb der ersten Einheit REC. Der erste Prozessor C1 leitet die Daten IP des Funkzugangspunkts AP anschließend an den ersten Add-Drop-Mulitplexer ADM1 weiter, der die Daten IP anschließend einem nicht dargestellten Gateway zum Internet zuführt. In umgekehrter Übertragungsrichtung gelangen durch den Funkzugangspunkt AP zu übertragende Daten IP aus dem Internet zunächst über den ersten Add-Drop-Multiplexer ADM1 zum ersten Prozessor C1. Vom ersten Prozessor C1 erfolgt eine Übertragung der Daten IP über die Schnittstelle IC zum zweiten Prozessor C2 und von dort zum Funkzugangspunkt AP, der nach Basisbandverarbeitung und Umsetzung in den Hochfrequenzbereich die Daten als Funksignale F2 zur zweiten Antenne A2 überträgt, von wo sie anschließend über die Luft ausgesendet werden.

Die erste Einheit REC und die zweite Einheit RE in Figur 1 weisen jeweils einen Multiplexer und Demultiplexer M1, M2 auf. Sie dienen dazu, die zu übertragenen bzw. empfangenen (Nutz-)Daten IQ der Basisstation BS, die Steuersignale CM des ersten Prozessors C1 sowie die Daten IP des Funkzugangspunktes AP auf die serielle Schnittstelle IC zu multiplexen bzw. von der seriellen Schnittstelle IC auf die entsprechenden Leitungen innerhalb der Einheiten REC, RE zu demultiplexen. Zwischen dem ersten Prozessor C1 und dem ersten Multiplexer M1 sowie zwischen dem zweiten Multiplexer M2 und dem zweiten Prozessor C2 erfolgt die Übertragung der Steuersignale CM und der Daten IP des zweiten Mobilfunksystems im Zeitmultiplex. Ebenso erfolgt der Empfang der Daten ATM, IP am Eingang der Basisstation BS und auch die Übertragung der Daten in umgekehrter Übertragungsrichtung über eine gemeinsame Leitung im Zeitmultiplex.

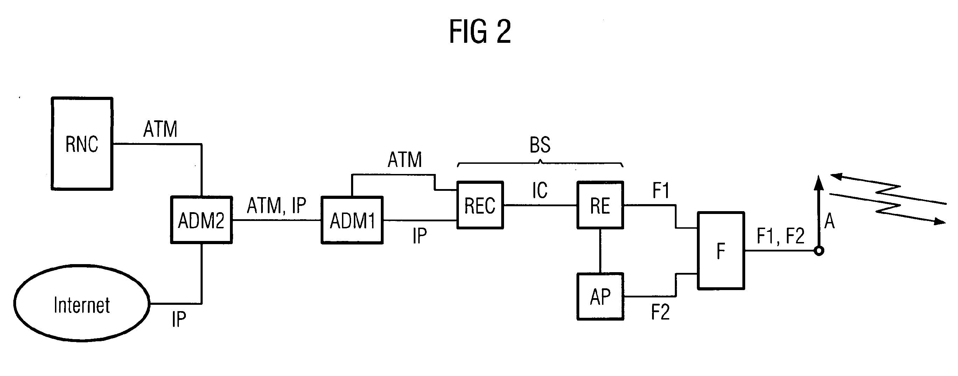

Figur 2 zeigt ein zweites Ausführungsbeispiel der Erfindung, bei dem die Basisstation BS und der Funkzugangspunkt AP (der beispielsweise wiederum in die zweite Einheit RE der Basisstation BS integriert sein kann) ihre Funksignale F1, F2 über eine gemeinsame Antenne A senden und empfangen. Hierzu werden die Funksignale F1, F2 in einer Einheit F kombiniert und über die Antenne A ausgestrahlt bzw. in umgekehrter Übertragungsrichtung von der Einheit F voneinander getrennt. Letzteres ist insbesondere dann einfach durchzuführen, wenn sich die Funksignale F1, F2 in unterschiedlichen Frequenzbändern befinden. Im Gegensatz zum Ausführungsbeispiel aus Figur 1 ist bei Figur 2 der erste Add-Drop-Multiplexer ADM1 am Ein- bzw. Ausgang der Basisstation BS nicht als deren Bestandteil baulich in die erste Einheit REC der Basisstation BS integriert, sondern separat von dieser ausgeführt. Vom ersten Add-Drop-Multiplexer ADM1 erfolgt über eine Verbindung (z.B. SDH (Synchronous Digital Hierarchy) oder PDH basierend) eine Übertragung der Datenpakete ATM, IP zu einem zweiten Add-Drop-Multiplexer ADM2, der über die Luftschnittstelle empfangene Datenpakete ATM, IP demultiplext und die den Daten IQ des ersten Mobilfunksystems entsprechende Datenpakete ATM einem Basisstationscontroller RNC zuführt und die Daten IP des zweiten Mobilfunksystems über ein Gateway dem Internet zuführt. Zu sendende Datenpakete ATM, IP werden durch den zweiten ADM Multiplexer ADM2 auf die gemeinsame Leitung zum ersten Add-Drop-Multiplexer ADM1 gemultiplext.

## Patentansprüche

1. Verfahren zum Übertragen von Daten innerhalb einer Basisstation (BS) eines ersten Mobilfunksystems, bei dem
- Daten (IQ) des ersten Mobilfunksystems in einer Basisbandeinheit (BB) der Basisstation (BS) im Basisband verarbeitet werden und in einer Hochfrequenzeinheit (RF) der Basisstation vom bzw. in den Hochfrequenzbereich umgesetzt werden,
- die Daten (IQ) des ersten Mobilfunksystems zwischen der Basisbandeinheit (BB) und der Hochfrequenzeinheit (RF) über eine Schnittstelle (IC) übertragen werden,
**dadurch gekennzeichnet,**
- **dass** zu sendende Daten (IP) eines zweiten Mobilfunksystems vor einer Bearbeitung im Basisband und/oder empfangene Daten (IP) des zweiten Mobilfunksystems nach einer Bearbeitung im Basisband ebenfalls über die Schnittstelle (IC) übertragen werden.

2. Verfahren nach Anspruch 1, bei dem
die Daten (IP) des zweiten Mobilfunksystems Ein- und/oder Ausgangsdaten eines Funkzugangspunktes (AP) des zweiten Mobilfunksystems sind.

3. Verfahren nach Anspruch 2, bei dem
der Funkzugangspunkt (AP) des zweiten Mobilfunksystems und die Hochfrequenzeinheit (RF) der Basisstation (BS) des ersten Mobilfunksystems baulich in eine gemeinsame Einheit (RE) integriert oder separat voneinander ausgeführt sind.

4. Verfahren nach Anspruch 2 oder 3, bei dem
die Basisstation (BS) des ersten Mobilfunksystems und der Funkzugangspunkt (AP) des zweiten Mobilfunksystems zu übertragende Signale (F1, F2) mit einer gemeinsamen Sende- und/oder Empfangsantenne (A) senden bzw. empfangen.

5. Verfahren nach einem der vorstehenden Ansprüche, bei dem die Daten (IQ) des ersten Mobilfunksystems der physikalischen Schicht und die Daten (IP) des zweiten Mobilfunksystems einer höheren Schicht eines Schichtenmodells zuzuordnen sind.

6. Verfahren nach einem der vorstehenden Ansprüche, bei dem die Schnittstelle (IC) eine serielle Schnittstelle ist, über die die Daten (IQ, IP) im Zeitmultiplex übertragen werden.

7. Verfahren nach Anspruch 6, bei dem
die Schnittstelle (IC) dem Common Public Radio Interface-Standard entspricht.

8. Verfahren nach einem der vorstehenden Ansprüche, bei dem eines der beiden Mobilfunksysteme zellular und das andere Mobilfunksystem nicht-zellular ist.

9. Basisstation (BS) für ein erstes Mobilfunksystem
- mit einer Basisbandeinheit (BB) zum Verarbeiten von Daten (IQ) des ersten Mobilfunksystems im Basisband,
- mit einer Hochfrequenzeinheit (RF) zur Umsetzung der Daten (IQ) des ersten Mobilfunksystems vom bzw. in den Hochfrequenzbereich,
- mit einer Schnittstelle (IC) zum Übertragen von Daten des ersten Mobilfunksystems zwischen der Basisbandeinheit (BB) und der Hochfrequenzeinheit (RF),
**gekennzeichnet durch**
- Mittel (C1; C2) zum Übertragen von zu sendenden Daten (IP) eines zweiten Mobilfunksystems vor einer Bearbeitung im Basisband und/oder zum Übertragen von empfangenen Daten (IP) des zweiten Mobilfunksystems nach einer Bearbeitung im Basisband ebenfalls über die Schnittstelle (IC).

10. Basisstation nach Anspruch 9,
deren Hochfrequenzeinheit (RF) und ein Funkzugangspunkt (AP) des zweiten Mobilfunksystems, von dem die Daten des zweiten Mobilfunksystems zu übertragen sind, in einer gemeinsamen Einheit (RE) baulich integriert sind.
